# EUROPÄISCHE PATENTSCHRIFT

(11) **EP 2 291 305 B1**
(45) Veröffentlichungstag und Bekanntmachung des Hinweises auf die Patenterteilung: **18.01.2012**
(21) Anmeldenummer: 09753310.3
(22) Anmeldetag: 25.05.2009
(51) Int. Cl.: B61D 47/00

(54) **SELBSTFAHRENDE, AUF GLEISEN VERFAHRBARE VERLADEHILFSEINRICHTUNG**
AUTOMOTIVE LOADING AID DEVICE WHICH CAN BE MOVED ON TRACKS
DISPOSITIF D'AIDE AU CHARGEMENT AUTOMOTEUR À DÉPLACEMENT SUR VOIE

(30) Priorität: 26.05.2008 AT 8402008
(43) Veröffentlichungstag der Anmeldung: 09.03.2011
(73) Patentinhaber: Unseld, Hans G., 1080 Wien (AT)
(72) Erfinder: Unseld, Hans G., 1080 Wien (AT)
(74) Vertreter: Krause, Peter
(86) Internationale Anmeldenummer: PCT/AT2009/000215
(87) Internationale Veröffentlichungsnummer: WO 2009/143546

(56) Entgegenhaltungen:
- EP-A1- 0 667 273
- AT-A1- 502 700
- CH-A5- 693 334
- US-A- 3 190 477

## Beschreibung

Die Erfindung betrifft eine selbstfahrende, auf einem Gleis verfahrbare Verladehilfseinrichtung zum Um- bzw. Verladen von mindestens einer Ladeeinheit, insbesondere eines Containers oder einer Wechselbrücke, von einem Eisenbahnwaggon auf einen anderen oder von einem Eisenbahnwaggon auf ein Fahrzeug, insbesondere einen Lastkraftwagen, oder einen Abstellplatz oder von einem Fahrzeug auf ein weiteres Fahrzeug oder eine Ladebrücke bzw. einen Abstellplatz oder umgekehrt, die im Bereich der zu verladenden Ladeeinheit, vorzugsweise im Bereich eines Container-Bodeneck-Fittings bzw. einer Ladekante, positionierbar ist und die mindestens eine, einen lasttragenden Zapfen oder einen Kragarm umfassende, Hebe- und Senkeinrichtung aufweist, wobei mindestens ein Rahmengestell für die Hebe- und Senkeinrichtung, eine Steuerung der Hebe- und Senkeinrichtung und eine Antriebssteuerung mit einem Fahrgestell-Rahmen für mindestens ein Fahrgestell bzw. Räder vorgesehen ist bzw. sind und dass das Fahrgestell bzw. die Räder gegenüber dem Fahrgestell-Rahmen oder der Fahrgestell-Rahmen gegenüber dem Rahmengestell höhenverstellbar ist bzw. sind.

Eine oben aufgezeigte selbstfahrende, auf einem Gleis verfahrbare Verladehilfseinrichtung ist aus der EP 0 667 273 A1 bekannt.

Eine Umsetzvorrichtung für Lasteinheiten ist aus der CH 693 334 A5 bekannt.

Aus der AT 502 700 B und der AT 502 634 B ist eine Verladehilfseinrichtung der eingangs aufgezeigten Art bekannt. Mit diesen Verladehilfseinrichtungen bzw. mit den in diesen Druckschriften angeführten Verfahren ist ein schnelles Um- und Verladen von Ladeeinheiten möglich.

Weiters ist aus der FR 2 670 762 A1 eine Vorrichtung und ein Verfahren zum Um- bzw. Verladen einer Ladeeinheit, insbesondere eines Containers, zwischen zwei Plattformen bekannt. Hierbei werden zwei Ausleger ausgefahren und die Ladeeinheit mittels Zylinder hochgehoben. Anschließend werden Träger unter die Einheit verschoben und die Zylinder wieder abgesenkt. Nun werden die Ausleger wieder eingefahren und die Ladeeinheit so in die neue Position bewegt.

In der DE 94 18 737 U1 und der DE 100 10 782 A1 werden der oben genannten Vorrichtung ähnliche Vorrichtungen aufgezeigt, wobei hier Sensoren zur Feststellung der Lage der einzelnen Elemente vorgesehen sind.

Die US 3 190 477 A zeigt eine Vorrichtung zum Um- bzw. Verladen einer Ladeeinheit, bei der ein Unterteil ausgefahren und ein darauf befindlicher Oberteil mittels Rollen verschoben wird. Die Ladeeinheit wird auf dem Oberteil verschoben.

Den obigen Vorrichtungen und Verfahren hängt vor allem der Nachteil an, dass sie nicht für das schnelle Umladen zwischen Schiene und Schiene bzw. Straße geeignet sind. Sind mehrere Ladeeinheiten umzuladen, so kann das immer nur nacheinander erfolgen, wodurch ein hoher Zeitaufwand erforderlich ist.

Aufgabe der Erfindung ist es, eine Verladehilfseinrichtung der eingangs genannten Art für ein Umladesystem zu schaffen, das einerseits die obigen Nachteile vermeidet und das anderseits ein wirtschaftliches, also effizientes und kostengünstiges Um- bzw. Verladen von Ladeeinheiten ermöglicht, damit die Schwachstelle des Gütertransports beseitigt werden kann.

Die Aufgabe wird durch die Erfindung gelöst.

Die erfindungsgemäße Verladehilfseinrichtung ist dadurch gekennzeichnet, dass der Fahrgestell-Rahmen bzw. das Rahmengestell im Hebe- und Senkbetrieb auf den Schienen der Gleise aufliegt. Mit der Erfindung ist es erstmals möglich, Ladeeinheiten durch die enorme Verkürzung des Umladevorganges infolge eines möglichen, vollautomatischen Betriebes, das heißt ohne Personal, kostengünstig umzuladen, so dass ein Warentransport auch über Bahnhöfe zwischen dem Ausgangs- und Zielbahnhof des Zuges, unter dem elektrischen Fahrdraht und ohne rangieren von Waggons, wirtschaftlich wird. Damit wird der Transport auf der Schiene konkurrenzfähig und zu einer wirtschaftlichen und volkswirtschaftlich notwendigen Alternative zum Transport auf der Straße.

Durch das erfindungsgemäße Rahmengestell wird in vorteilhafterweise eine kompakte Bauweise erreicht. Ferner werden durch die Auflage des Fahrgestell-Rahmens bzw. des Rahmengestells auf den Schienen der Gleise alle Lastmomente und Kräfte über Flächen übertragen. Eine optimierte Lastverteilung ist damit gegeben.

Für einen Um- bzw. Verladevorgang werden vorwiegend vier Verladehilfseinrichtungen an den Bodeneck-Fittings der Ladeeinheit positioniert. Die Verladehilfseinrichtungen werden beidseitig, parallel zum Verladegleis mit ihren Gleisen vorgesehen und zum Um- bzw. Verladen einer Ladeeinheit zwei, vorzugsweise vier oder mehr, Verladehilfseinrichtungen im Bereich der zu verladenden Ladeeinheit positioniert. Durch die gleichmäßige Verteilung der Last auf mindestens zwei, vorzugsweise vier, Verladehilfseinrichtungen können sowohl die Verladehilfseinrichtungen als auch die Verschiebe-Einrichtungen wesentlich schlanker, das heißt gewichtssparender ausgeführt werden. Die Ladeeinheiten werden durch zwei, vorzugsweise vier, Verladehilfseinrichtungen angehoben und können so Unregelmäßigkeiten beim Anheben der Last ausgleichen. Etwaige Probleme können so leicht erkannt und rechtzeitig Gegenmaßnahmen eingeleitet werden. Auf diese Weise wird die Unfallgefahr auf ein Minimum reduziert.

Die Positionierung der Verladehilfseinrichtungen erfolgt über die Logistik. Die Logistik kann ermitteln, welche Ladeeinheiten im nächsten Bahnhof um- oder verladen werden, welche Lastaufnahmevorrichtung an den Ladeeinheiten vorhanden sind, wie beispielsweise Ladekante, Öse oder Bolzen, und welche Position diese Ladeeinheiten auf den Transportfahrzeugen haben bzw. wo sie zwischengelagert sind. Auf Grund dieser Informationen wird veranlasst, dass die richtigen Verladehilfseinrichtungen, mit den passenden Hebe- und Senkvorrichtungen für das Bewegen der Ladeeinheiten in senkrechter Richtung, noch vor dem Stillstand des Zuges bzw. des Transportfahrzeuges an der richtigen Stelle und vor allem in der benötigten Anzahl positioniert werden können. Damit ist sichergestellt, dass nach dem Stillstand des Transportfahrzeuges sofort mit dem zeitgleichen und/oder parallelem Um- bzw. Verladen begonnen werden kann. Durch den ausfahrbaren Zapfen bzw. Kragarm können die Verladehilfseinrichtung sehr nahe am Transportfahrzeug und damit an der Ladeeinheit positioniert werden. Je kleiner der Abstand Verladehilfseinrichtung zur Ladeeinheit bzw. zur Lastaufnahmevorrichtung an den Ladeeinheiten, wie Ladekante, Fitting, Öse oder Bolzen, ist, um so geringer wird das Lastaufnahmemornent, das beim Anheben der zum Teil tonnenschweren Ladeeinheiten entsteht und das von der Verladehilfseinrichtung aufgenommen und übertragen werden muss. Durch den geringen Abstand ist auch das Moment wesentlich kleiner und die Verladehilfseinrichtung braucht nicht so massiv ausgeführt werden, was die Herstellkosten bzw. in weiterer Folge die erforderlichen Investitionskosten niedrig hält.

Nach einem besonderen Merkmal der Erfindung ist ein Sicherungsmechanismus vorgesehen, der die Verladehilfseinrichtung im Hebe- und Senkbetrieb mit den Schienen der Gleise, profilgleich oder profilschlüssig, verbindet. Der Vorteil liegt darin, dass die Verladehilfseinrichtung im Hebe- und Senkbetrieb sowie im Bahn-Durchfahrtsbetrieb an den Schienen der Gleise definiert fixiert wird. Unter Lasteinwirkung hat damit die Verladehilfseinrichtung eine stabile ortsfeste Lage. Damit kommt auch die weit günstigere Flächenpressung, die eine Schonung des Materials zur Folge hat, unter Last zum Tragen.

Gemäß einer Ausgestaltung der Erfindung besteht der Sicherungsmechanismus aus elektromechanischen Bauteilen, beispielsweise mindestens einem Magnet. Mit dieser einfachen Art der Sicherung ist ein einwandfreier Betrieb gewährleistet.

Nach einer alternativen Ausgestaltung der Erfindung besteht der Sicherungsmechanismus aus die Schienenköpfe vorzugsweise hintergreifenden und selbst sichernden Gleis-Klammern. Mit dieser Ausführung eines mechanischen Sicherungsmechanismus sind eine Fixierung und eine definierte Zentrierung, vorzugsweise durch eine Ausführung mit Schienenprofilumschließung, der Verladehilfseinrichtung, unabhängig von einer elektrischen Energieversorgung, gewährleistet. Bei einem eventuellen Ausfall einer elektrischen Energieversorgung ist eine autarke Sicherung gegeben. Gemäß einer weiteren Ausgestaltung der Erfindung erfolgt die Höhenverstellung der Fahrgestelle bzw. der Räder bzw. des Fahrgestell-Rahmens hydraulisch, pneumatisch oder elektromechanisch. Dadurch können die Räder von der Schiene genommen werden. Die Räder werden quasi eingezogen und die Verladehilfseinrichtung liegt mit dem Fahrgestell-Rahmen oder dem Rahmengestell auf den Schienen der Gleise auf. Damit ist eine weit günstigere Flächenpressung gegeben.

Nach einer Weiterbildung der Erfindung liegt im Hebe- und Senkbetrieb das Rahmengestell selbst oder mit seinem Fahrgestell-Rahmen auf den Schienenlaufflächen auf, wobei im Bereich der Räder radkastenähnliche Ausnehmungen vorgesehen sind. Derartige Radkästen sind für die eingezogenen Räder gedacht und konstruktionstechnisch mit einfachsten Mitteln vorzusehen.

Gemäß einem besonderen Merkmal der Erfindung sind im Rahmengestell die Hebe- und Senkeinrichtung als Hebe-Baugruppe, die Steuerung der Hebe- und Senkeinrichtung als Positions-Baugruppe und der Fahrgestell-Rahmen bzw. die Fahrgestelle bzw. die Räder mit ihrer Antriebssteuerung als Boden-Baugruppe modulartig aufgebaut. Durch die Modulbauweise kann den Anforderungen an Robustheit und unbedingte Einsatzfähigkeit auch unter widrigsten Einsatzbedingungen Rechnung getragen werden. Durch die dreiteilige Strukturierung in Baugruppen finden nicht nur Funktionen, sondern auch Technologien und deren Eignung im Bahnbetrieb Berücksichtigung. In diesem erfindungsgemäßen Konzept finden Wartung bzw. Fernwartung, Reparatur und Servicefreundlichkeit ihren Niederschlag.

Nach einer weiteren Ausgestaltung der Erfindung umfasst die Hebe- und Senkeinrichtung für die Hubbewegung des lasttragenden Zapfens oder des Kragarms einen, vorzugsweise einen sechs- oder achteckigen Querschnitt aufweisenden, insbesondere hydraulischen, Hubzylinder, wobei der Hubzylinder, vorzugsweise an seinem unteren Ende, gegebenenfalls kardanisch gelagert ist. Die Auswahl eines derartigen Hubzylinders bringt den Vorteil mit sich, dass damit ein optimales Widerstandsmoment für außermittige Belastungen erreicht wird. Durch die kardanische Lagerung kann ein Ausgleich zu lokalen Gleissenkungen erreicht werden.

Nach einer Weiterbildung der Erfindung sind in dem Rahmengestell zwei, vorzugsweise spiegelverkehrte, Boden- und Positions-Baugruppen mit jeweils einer Hebe- und Senkeinrichtung vorgesehen. Dadurch wird für den Einsatz der Verladehilfseinrichtung eine Duplizität geschaffen, die vor allem bei nahe beieinander angeordneten Containern in vorteilhafterweise zum Tragen kommt. Ferner wird dadurch eine Systemredundanz geschaffen.

Gemäß einer besonderen Ausgestaltung der Erfindung weist die Boden-Baugruppe eine, vorzugsweise elektromotorisch angetriebene, Ausgleichsplattform auf, auf der sich die Positions-Baugruppe abstützt. Die Ausgleichsplattform positioniert die Positions-Baugruppe auf die Nullposition der Hebe-Baugruppe. Zur Positionsfindung zählt das Gleislagenprofil, unter anderem der lokale Ausgleich von Senkungen im Gleisbereich nach aktuellen und/oder historischen Daten. Die Positions-Baugruppe bildet die Basis für die Hubaggregate und grenzt die hydraulischen Funktionsgruppen zu den Gleisen und der Umgebung ab.

Nach einer Weiterbildung der Erfindung ist die Positions-Baugruppe über die Ausgleichsplattform, beispielsweise über vier Spindeln, mit der Boden-Baugruppe verbunden. Diese Spindeln positionieren die Positions-Baugruppe lastfrei auf ihre definierte Position, die bereits angesprochene Nullposition.

Gemäß einem besonderen Merkmal der Erfindung umfasst die Boden-Baugruppe die Räder mit mindestens einem Antriebsmotor und die Antriebssteuerung, die Höhenverstellung für die Räder, eine Energieversorgung, den Antrieb für die Ausgleichsplattform und den Sicherungsmechanismus mit seinem Antrieb. Dadurch ist eine klare und eindeutige Zuordnung gemäß der Funktionalität gegeben. Natürlich kann die Energieversorgung auch hybridmäßig oder über eine Batterie erfolgen.

Nach einem weiteren besonderen Merkmal der Erfindung umfasst die Positions-Baugruppe eine Steuerung bzw. Regelung für den bzw. die Hubzylinder sowie deren Positioniersteuerung für das Lasthebemittel, wie Zapfen oder Kragarm. Auch diese Strukturierung trägt zur definierten Trennung der Funktionen bei. Gemäß einem weiteren besonderen Merkmal der Erfindung umfasst die Hebe-Baugruppe Lasthebemittel, wie Zapfen oder Kragarm, gegebenenfalls eine Abstützung für einen Ausleger und/oder ein Erkennungsorgan für die Lastaufnahmefläche der Ladeeinheit. Wie bereits erwähnt, trägt die Strukturierung dazu bei, dass Wartungs- und Servicearbeiten rationell durchgeführt werden können.

Nach einer weiteren besonderen Ausgestaltung der Erfindung weist der Zapfen einen in Zapfenlängsrichtung beweg- bzw. ausfahrbaren, gegebenenfalls verdrehbaren, Zapfenstummel zum Eingriff in den Boden-Eckfitting eines Containers, eine senkrecht nach oben weisende Zapfennase zum Eingriff in Boden-Fittings und eine Hebenut zum Einrasten der Ladekante einer Wechselbrücke auf. Durch diese Zapfennase ist die Möglichkeit gegeben, dass dem Kragarm im Umladeprozess einer Wechselbrücke auch eine Haltefunktion der Wechselbrücke zum Unterschieben einer beispielsweisen Transferpalette zukommt.

Die Erfindung wird an Hand von Ausführungsbeispielen, die in den Zeichnungen dargestellt sind, näher erläutert.

Es zeigen:
Fig. 1a einen schematischen Querschnitt einer Verladehilfseinrichtung bei einer Fahrbewegung auf den Gleisen,
Fig. 1b eine offene Gleisklammer als Detail aus der Fig. 1a,
Fig. 1c einen schematischen Querschnitt einer Verladehilfseinrichtung im Hebe-und Senkbetrieb,
Fig. 1d eine den Schienenkopf umschließende Gleis-Klammer als Detail aus der Fig. 1c,
Fig. 2a und Fig. 2b die Verladehilfseinrichtung in einer Seitenansicht,
Fig. 3 schematisch den Aufbau einer Boden-Baugruppe der Verladehilfseinrichtung,
Fig. 4 schematisch den Aufbau der Verladehilfseinrichtung in Modulbauweise,
Fig. 5 ein schematisches Design der Verladehilfseinrichtung,
Fig. 6 einen Zapfen einer Hebe- und Senkeinrichtung und
Fig. 7 eine schematische Darstellung eines Umladevorganges von einer Zapfengruppe auf eine andere Zapfengruppe.

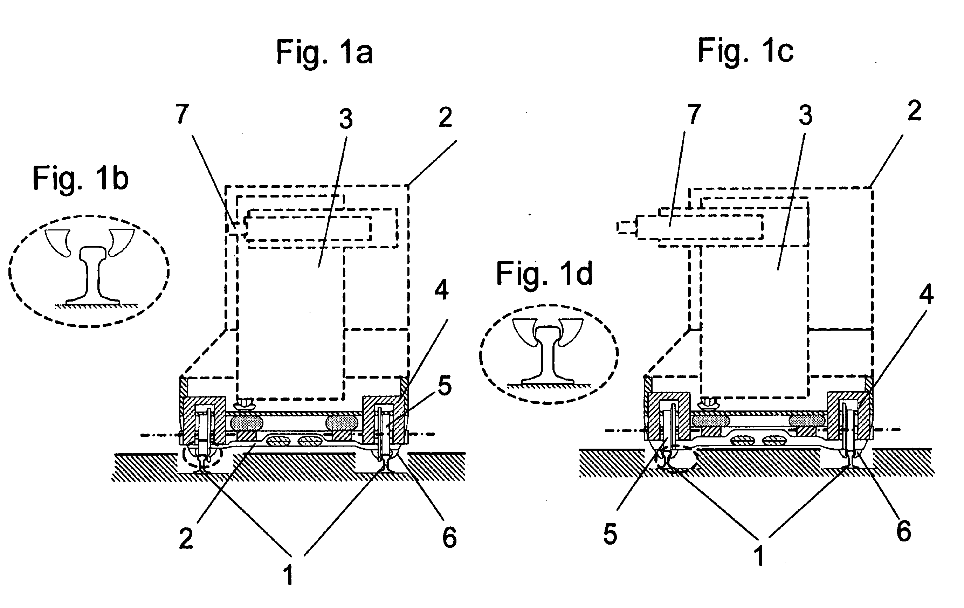

Gemäß der Fig. 1a ist eine selbstfahrende, auf einem Gleis 1 verfahrbare Verladehilfseinrichtung zum Um- bzw. Verladen von mindestens einer Ladeeinheit, insbesondere eines Containers, gezeigt. Für einen Um- bzw. Verladevorgang werden vier Verladehilfseinrichtungen an den Bodeneck-Fittings der - nicht dargestellten - Ladeeinheit positioniert. Je zwei Verladehilfseinrichtungen werden beidseitig, parallel zum Verladegleis mit ihren Gleisen 1 positioniert.

Steuerungstechnisch kann die Geschwindigkeit der zu positionierenden Verladehilfseinrichtungen auf die Geschwindigkeit des einfahrenden Zuges abgestimmt werden.

Derartige Verladehilfseinrichtungen dienen zum Um- bzw. Verladen von einer Ladeeinheit von einem Eisenbahnwaggon auf einen anderen oder von einem Eisenbahnwaggon auf ein Fahrzeug, insbesondere einen Lastkraftwagen, oder eine Ladebrücke bzw. einen Abstellplatz oder von einem Fahrzeug auf ein weiteres Fahrzeug oder einen Abstellplatz oder umgekehrt. Die Verladehilfseinrichtungen sind im Bereich der zu verladenden Ladeeinheit, im Fall von Wechselbrücken im Bereich einer Ladekante, positionierbar.

Die Verladehilfseinrichtung weist ein Rahmengestell 2 für die Hebe- und Senkeinrichtung 3 und einen Fahrgestell-Rahmen 4 mit Rädern 5 auf. Für den Hebe- und Senkbetrieb weist die Hebe- und Senkeinrichtung 3 einen lasttragenden Zapfen 7 auf, der in die entsprechende Öse des Bodeneck-Fittings des Containers eingreift. Am Rahmengestell 2 sind Gleis-Klammern 6 vorgesehen, die - wie in Fig. 1 b gezeigt - im Fahrbetrieb zum Positionieren der Verladehilfseinrichtung offen sind.

Ist die Verladehilfseinrichtung in ihrer Position im Bereich eines Bodeneck-Fittings positioniert, wird die Verladehilfseinrichtung für den Hebe- und Senkbetrieb funktionsfähig gemacht. Dazu ist der Fahrgestell-Rahmen 4 gegenüber dem Rahmengestell 2 höhenverstellbar ausgeführt. Im Hebe- und Senkbetrieb liegt das Rahmengestell 2 auf den Schienen des Gleises 1 auf.

Bei alternativen Konstruktionsvarianten könnte das Fahrgestell mit den Rädern 5 gegenüber dem Fahrgestell-Rahmen 4 höhenverstellbar sein, wobei dann im Hebe- und Senkbetrieb der Fahrgestell-Rahmen 4 auf der Lauffläche der Schienen aufliegt. Die Höhenverstellung der Fahrgestelle bzw. der Räder 5 bzw. des Fahrgestell-Rahmens 4 erfolgt hydraulisch oder elektromechanisch.

In jedem Fall werden aber die Gleis-Klammern 6 im Hebe- und Senkbetrieb sowie im Bahn-Durchfahrtsbetrieb - wie in Fig. 1 d gezeigt - geschlossen. Die Gleis-Klammern 6 umschließen dazu den Schienenkopf. Die Gleis-Klammern 6 sind als Sicherungsmechanismus im Hebe- und Senkbetrieb vorgesehen, sind selbst sichernd und verbinden die Verladehilfseinrichtung mit den Schienen des Gleises 1 profilgleich oder profilschlüssig.

Natürlich sollte auch steuerungstechnisch Vorsorge getroffen werden, dass die Gleis-Klammern 6 auch in einem stromlosen Zustand, der einen Störfall darstellen könnte, geschlossen sind.

Der Sicherungsmechanismus könnte natürlich auch in alternativen Konstruktionen aus elektromechanischen Bauteilen, beispielsweise einem Magnet bzw. Magneten, bestehen, der bzw. die über die magnetischen Kräfte die Verladehilfseinrichtung mit den Schienen starr verbindet.

Für den Hebe- und Senkbetrieb weist die Hebe- und Senkeinrichtung 3 den ausgefahrenen lasttragenden Zapfen 7 auf, der in die entsprechende Öse des Bodeneck-Fittings des Containers eingreift.

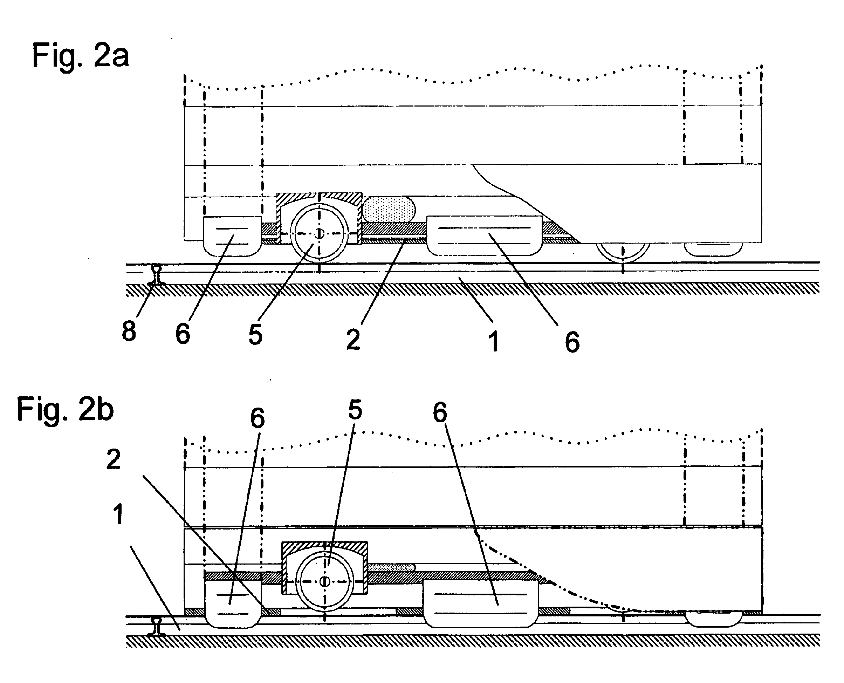

Gemäß der Fig. 2a ist die Verladehilfseinrichtung im mit den Rädern 5 verfahrbaren Betrieb, nämlich mit gelockerten Gleis-Klammern 6 gezeigt. Das Rahmengestell 2 ist im Abstand zu den Schienen des Gleises 1. Das Schienenprofil 8 ist strichpunktiert eingezeichnet.

Gemäß der Fig. 2b ist die Verladehilfseinrichtung im Hebe- und Senkbetrieb dargestellt. Das Rahmengestell 2 liegt auf der Lauffläche der Schienen des Gleises 1 auf und die Gleis-Klammern 6 sind, wie in Fig. 1d gezeigt, selbst sichernd geschlossen.

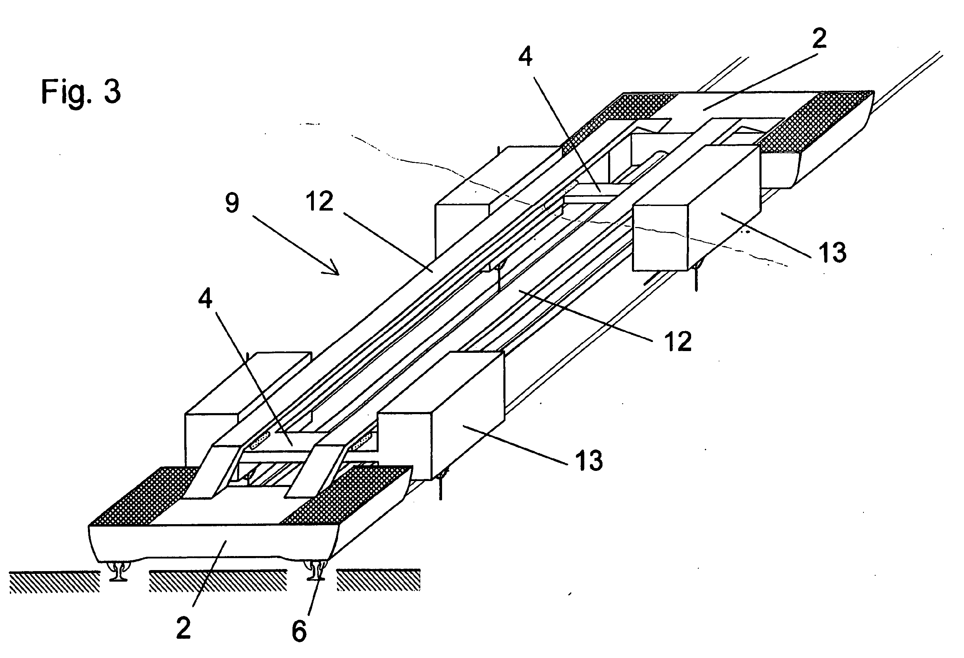

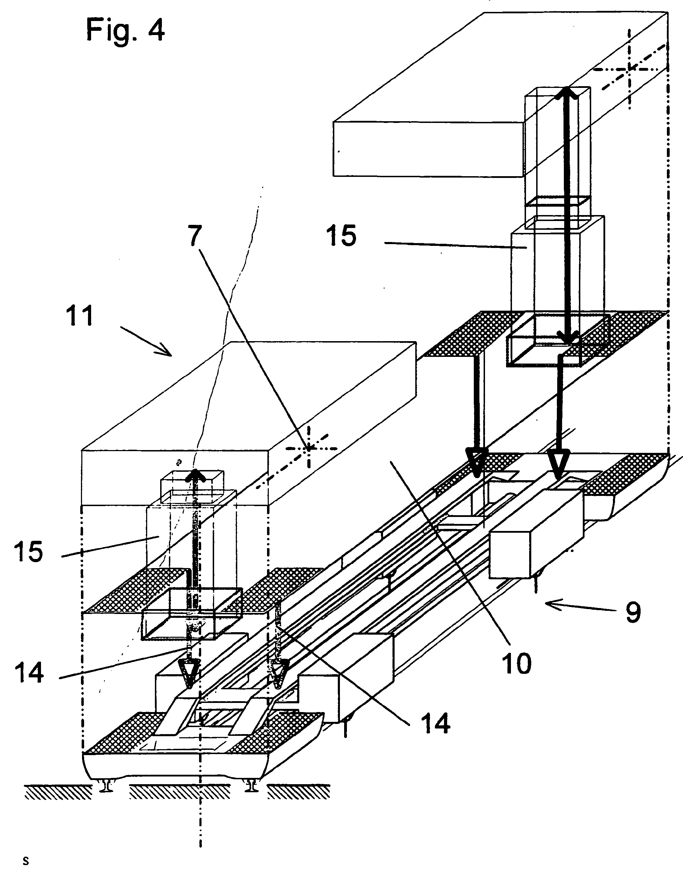

Einleitend zur Fig. 3 wird erwähnt, dass die Verladehilfseinrichtung modulartig aufgebaut ist. Der Fahrgestell-Rahmen 4 bzw. die Fahrgestelle bzw. die Räder 5 mit ihrer Antriebssteuerung sind als Modul einer Boden-Baugruppe 9 im unteren Teil des Rahmengestells 2 vorgesehen. Ferner weist die Boden-Baugruppe 9 eine Ausgleichsplattform 12 auf, auf der sich eine Positions-Baugruppe 10 - Fig. 4 - abstützt. Als drittes Modul ist die Hebe- und Senkeinrichtung 3 in einer Hebe-Baugruppe 11 vorgesehen. Im Detail wird auf die Fig. 4 noch später näher eingegangen.

Im unteren Teil des Rahmengestells 2 sind auch der bzw. die Fahrgestell-Rahmen 4 mit den Fahrgestellen bzw. den Rädern 5 vorgesehen. Ebenso werden in dieser Boden-Baugruppe 9 die notwendigen Antriebsmotoren und eine Antriebssteuerung angeordnet. Weiters umfasst die Boden-Baugruppe 9 die Höhenverstellung für die Räder 5 bzw. für den bzw. die Fahrgestell-Rahmen 4, eine Energieversorgung, gegebenenfalls einen Antrieb für die Ausgleichsplattform 12 und den Sicherungsmechanismus, also im dargestellten Fall die Gleis-Klammern 6, mit seinem Antrieb. Die Boden-Baugruppe 9 ist im Hebe- und Senkbetrieb, mit geschlossenen Gleis-Klammern 6 dargestellt, wobei die Übertragung aller Lasten und Momente der Verladehilfseinrichtung über das Rahmengestell 2 auf die Schienen der Gleise 1 erfolgt. Im Bereich der Räder 5 sind radkastenähnliche Ausnehmungen 13 vorgesehen. Die Höhenverstellung der Fahrgestelle bzw. der Räder 5 bzw. des Fahrgestell-Rahmens 4 erfolgt hydraulisch, pneumatisch oder elektromechanisch.

Wie bereits kurz erwähnt, ist die Verladehilfseinrichtung gemäß Fig. 4 modulartig aufgebaut. Über der Boden-Baugruppe 9 ist die Positions-Baugruppe 10 angeordnet. Die Positions-Baugruppe 10 ist über die Ausgleichsplattform 12, beispielsweise über vier, vorzugsweise elektromotorisch angetriebene, Spindeln, - die durch die Pfeile 14 symbolisch dargestellt sind - mit der Boden-Baugruppe 9 verbunden. Die Positions-Baugruppe 10 umfasst eine Steuerung bzw. Regelung für mindestens einen zur Hebe-Baugruppe 11 gehörenden Hubzylinder 15 sowie eine Positioniersteuerung für das Lasthebemittel, wie dem Zapfen 7 oder dem Kragarm.

Das Herz der Hebe-Baugruppe 11 ist die Hebe- und Senkeinrichtung 3 bestehend aus dem Lasthebemittel, wie dem Zapfen 7, und dem Hubzylinder 15. Der Hubzylinder 15 weist vorzugsweise einen sechs- oder achteckigen Querschnitt auf und ist insbesondere in hydraulischer Ausführung.

In dem Rahmengestell 2 der Verladehilfseinrichtung sind in besonderen Ausführungsvarianten zwei, vorzugsweise spiegelverkehrte, Boden- 9 und Positions-Baugruppen 10 mit jeweils einer Hebe- und Senkeinrichtung 3 vorgesehen.

In einer alternativen Konstruktionsausführung könnte der Hubzylinder 15 kardanisch gelagert sein. Eine derartige Kardanlagerung könnte die Ausgleichsplattform 12 ersetzen.

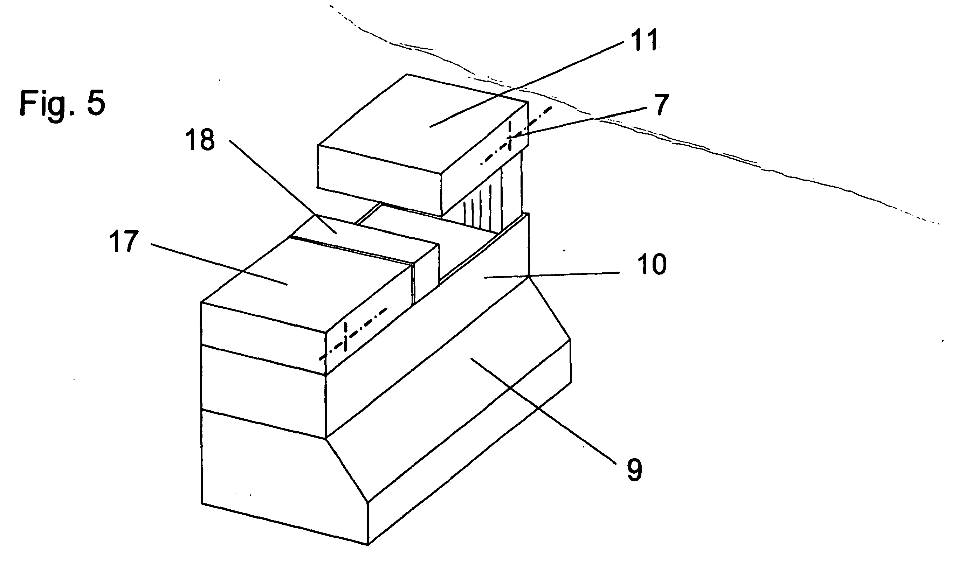

Die Hebe-Baugruppe 11 könnte neben dem Lasthebemittel, wie dem Zapfen 7 oder Kragarm, gegebenenfalls auch eine Abstützung für einen Ausleger und/oder ein Erkennungsorgan für die Lastaufnahmefläche der Ladeeinheit umfassen. Gemäß der Fig. 5 ist in einer Prinzipskizze die Verladehilfseinrichtung - ohne Räder 5 - gezeigt. Das Rahmengestell 2 ist verkleidet und die symmetrische Anordnung von zwei Hebe-Baugruppen 11, angeordnet über der Positions-Baugruppe 10, die wiederum über der Boden-Baugruppe 9 angeordnet ist, ist deutlich erkennbar.

Mittig, zwischen den beiden Hebe-Baugruppen 11 ist für die Lastaufnahmefläche der Ladeeinheit ein Erkennungsorgan 18 vorgesehen. Für einen Ausleger ist auf der die Ladeeinheit nicht hebenden Hebe-Baugruppe 11 mit dem Bezugszeichen 17 eine Abstützung für einen Ausleger vorgesehen.

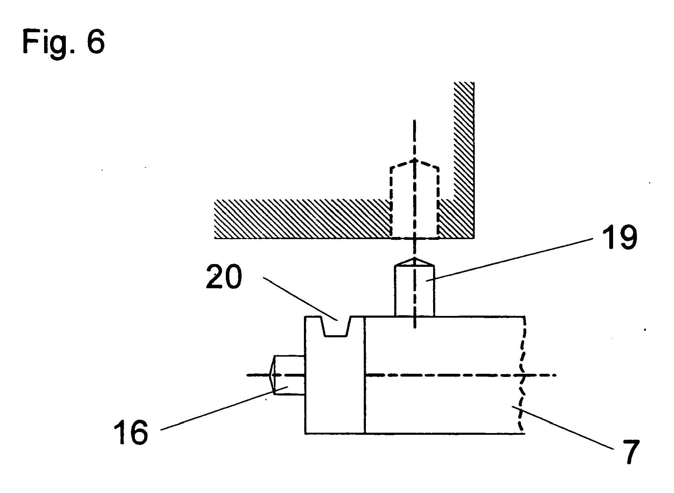

Die Fig. 6 zeigt einen Zapfen 7 einer Hebe-Baugruppe 11, der sowohl zum Verladen eines Containers als auch einer Wechselbrücke verwendet werden kann.

Der Zapfen 7 weist an seiner Stirnseite einen, in Zapfenlängsrichtung bewegbaren bzw. ausfahrbaren, Zapfenstummel 16 auf, der bei einer Verladung von Containern in die Boden-Eckfttings zum Heben und Senken eingreift. Über diesen Zapfenstummel 16 kann auch durch Verdrehung eine Verriegelung im Boden-Eckfitting zur Sicherung während des Umladevorganges stattfinden

Dieser Zapfen 7 wird jedoch auch als Kragarm für den Umladeprozess einer Wechselbrücke verwendet. Wie ja an sich bekannt, weisen Wechselbrücken seitlich jeweils eine Ladekante auf und zum Sichern auf einer Ladefläche sind in bzw. unter der Bodenplatte Boden-Fittings vorgesehen, in die, auf der Ladefläche vorgesehene, Sicherungen eingreifen. Diese Sicherung dient vor allem gegen ein Verrutschen der Ladeeinheit.

Um nun eine Wechselbrücke anheben zu können, das nur über die Ladekante gestattet ist, weist der Zapfen 7 eine Hebenut 20 auf, in die die Ladekante zum Heben und Senken einrastet. Ferner weist der Zapfen 7 eine senkrecht nach oben weisende Zapfennase 19 zum Eingriff in die Boden-Fittings einer Wechselbrücke auf. Diese Zapfennase 19 dient - wie später noch aufgezeigt wird - zum Halten der angehobenen Wechselbrücke im Zuge des Verladevorganges. In der Verwendung als Kragarm zum Heben und Senken muss der Zapfenstummel 16 nicht ausgefahren werden.

Dadurch, dass der Zapfen 7 in horizontaler Richtung gesteuert bewegt werden kann, können auch Schrägstellungen der Ladeeinheiten auf der Ladefläche ausgeglichen werden.

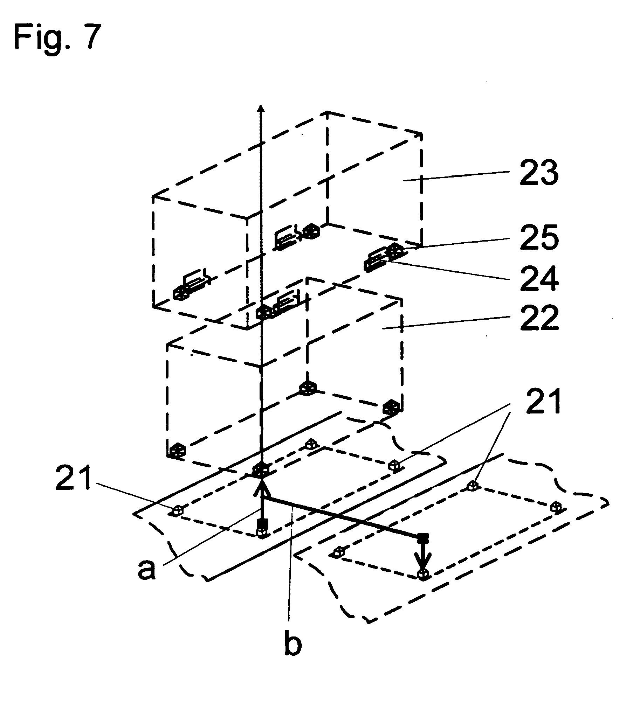

Abschließend wird an Hand der Fig. 7 noch ein Umladevorgang eines Containers und einer Wechselbrücke, insbesondere unter dem Fahrdraht, eingehend dargelegt.

Da ja die Ladeeinheiten während ihres Transports gegen Verschiebungen oder Verrutschen gesichert sein müssen, sind an den Ladeeinheiten Bodenfittings mit Ausnehmungen vorgesehen, in die Sicherungszapfen 21 eingreifen. Es erfolgt somit in der Praxis eine Umladung der Ladeeinheit von einer Sicherungszapfengruppe auf eine andere Sicherungszapfengruppe. Beispielsweise ist eine Sicherungszapfengruppe am Eisenbahnwaggon und die andere Sicherungszapfengruppe auf einer Ladebrücke vorgesehen. Zu einer Sicherungszapfengruppe sind, auf Grund des Gewichts und der Stabilität der Ladeeinheiten, mindestens zwei Sicherungszapfen 21 vorgesehen. Im Praxisfall sind meist vier Sicherungszapfen 21 angeordnet. Korrespondierend dazu weisen die Ladeeinheiten entsprechende Fittings auf, in die die Sicherungszapfen 21 eingreifen.

Der Umladevorgang eines Standardcontainers 22 wurde in großen Zügen bereits an Hand der Fig. 1a aufgezeigt. Der Standardcontainer 22 wird über vier, jeweils zwei an jeder Seite, an den Eckpunkten positionierten Verladehilfseinrichtungen aus den Sicherungszapfen 21 gehoben (Schritt a). Unter den angehobenen Standardcoritainer 22 wird eine Transferpalette mit einer eigenen Sicherungszapfengruppe unterschoben und der Standardcontainer 22 auf die Transferpalette, mit eingegriffenen Sicherungszapfen 21 in dem Boden-Eckfitting, abgesenkt. Nun kann der Standardcontainer 22 horizontal, beispielsweise über eine Verschiebe-Einheit, verschoben werden (Schritt b) und steht für einen weiteren Transport, nunmehr in einem fahrdrahtlosen Bereich, zur Verfügung.

Im Gegensatz dazu bedarf der Umladevorgang eines Wechselaufbaues 23, der einer Wechselbrücke entspricht und auch als Wechselcontainer oder Wechselbehälter bezeichnet wird, acht Verladehilfseinrichtungen, wobei auf jeder Seite vier derartige Verladehilfseinrichtungen positioniert werden.

Wie ja bereits aufgezeigt, weisen Wechselaufbauten 23 seitlich jeweils mindestens eine der Ladekante entsprechende Hebekante 24 auf und zum Sichern auf einer Ladefläche sind in bzw. unter der Bodenplatte den Boden-Fittings entsprechende Beschläge 25 vorgesehen, in die die, auf der Ladefläche vorgesehene, Sicherungszapfen 21 eingreifen.

Durch die Anordnung der Hebekante 24 entlang einer Seite des Wechselaufbaues 23 und die Positionierung einer Verladehilfseinrichtung an dieser Stelle kann die Transferpalette erst unterschoben werden, wenn mit vier, im Bereich der Ecken positionierten Verladehilfseinrichtungen der Wechselaufbau 23 im Abstand zur Ladefläche gehalten wird. Zum Halten des Wechselaufbaues 23 dienen die Zapfen 7 mit den Zapfennasen 19, die in die Beschläge 25 eingreifen. Für einen Umladevorgang eines Wechselaufbaues 23 werden somit vier Verladehilfseinrichtungen zum Heben und Senken an den Ladekanten und vier Verladehilfseinrichtungen zum Halten des Wechselaufbaues 23, wenn die Transferpalette unterschoben wird, benötigt.

Zur Steuerung der Verladehilfseinrichtungen können Sensoren Verwendung finden. Mit derartigen Sensoren kann die genaue Längsposition der Verladehilfseinrichtung auf ihrem Gleis definiert werden. Ferner können über Sensoren auch die exakte Lage der Boden-Eckfittings, der Boden-Fittings, der Ladekante und der Sicherungszapfen 21 ermittelt werden. Bei einer Verwendung von Sensoren muss ein Referenzpunkt festgelegt werden, wobei beispielsweise die Gleisinnenkante als Referenzpunkt genommen werden kann.

## Patentansprüche

1. Selbstfahrende, auf einem Gleis (1) verfahrbare Verladehilfseinrichtung zum Um- bzw. Verladen von mindestens einer Ladeeinheit, insbesondere eines Containers oder einer Wechselbrücke, von einem Eisenbahnwaggon auf einen anderen oder von einem Eisenbahnwaggon auf ein Fahrzeug, insbesondere einen Lastkraftwagen, oder einen Abstellplatz oder von einem Fahrzeug auf ein weiteres Fahrzeug oder eine Ladebrücke bzw. einen Abstellplatz oder umgekehrt, die im Bereich der zu verladenden Ladeeinheit, vorzugsweise im Bereich eines Container-Bodeneck-Fittings bzw. einer Ladekante, positionierbar ist und die mindestens eine, einen lasttragenden Zapfen (7) oder einen Kragarm umfassende, Hebe- und Senkeinrichtung (3) aufweist, wobei mindestens ein Rahmengestell (2) für die Hebe- und Senkeinrichtung (3), eine Steuerung der Hebe- und Senkeinrichtung (3) und eine Antriebssteuerung mit einem Fahrgestell-Rahmen (4) für mindestens ein Fahrgestell bzw. Räder (5) vorgesehen ist bzw. sind und dass das Fahrgestell bzw. die Räder (5) gegenüber dem Fahrgestell-Rahmen (4) oder der Fahrgestell-Rahmen (4) gegenüber dem Rahmengestell (2) höhenverstellbar ist bzw. sind, **dadurch gekennzeichnet, dass** der Fahrgestell-Rahmen (4) bzw. das Rahmengestell (2) derart ausgebildet ist, dass es im Hebe-und Senkbetrieb auf den Schienen der Gleise (1) aufliegt.

2. Verladehilfseinrichtung nach Anspruch 1, **dadurch gekennzeichnet, dass** ein Sicherungsmechanismus vorgesehen ist, der die Verladehilfseinrichtung im Hebe- und Senkbetrieb mit den Schienen der Gleise (1), profilgleich oder profilschlüssig, verbindet.

3. Verladehilfseinrichtung nach Anspruch 2, **dadurch gekennzeichnet, dass** der Sicherungsmechanismus aus elektromechanischen Bauteilen, beispielsweise mindestens einem Magnet, besteht.

4. Verladehilfseinrichtung nach Anspruch 2, **dadurch gekennzeichnet, dass** der Sicherungsmechanismus aus die Schienenköpfe vorzugsweise hintergreifenden und selbst sichernden Gleis-Klammern (6) besteht.

5. Verladehilfseinrichtung nach einem der Ansprüche 1 bis 4, **dadurch gekennzeichnet, dass** die Höhenverstellung der Fahrgestelle bzw. der Räder (5) bzw. des Fahrgestell-Rahmens (4) hydraulisch, pneumatisch oder elektromechanisch erfolgt.

6. Verladehilfseinrichtung nach einem der Ansprüche 1 bis 5, **dadurch gekennzeichnet, dass** im Hebe- und Senkbetrieb das Rahmengestell (2) selbst oder mit seinem Fahrgestell-Rahmen (4) auf den Schienenlaufflächen aufliegt, wobei im Bereich der Räder (5) radkastenähnliche Ausnehmungen (13) vorgesehen sind.

7. Verladehilfseinrichtung nach einem der Ansprüche 1 bis 6, **dadurch gekennzeichnet, dass** im Rahmengestell (2) die Hebe- und Senkeinrichtung (3) als Hebe-Baugruppe (11), die Steuerung der Hebe- und Senkeinrichtung (3) als Positions-Baugruppe (10) und der Fahrgestell-Rahmen (4) bzw. die Fahrgestelle bzw. die Räder (5) mit ihrer Antriebssteuerung als Boden-Baugruppe (9) modulartig aufgebaut sind.

8. Verladehilfseinrichtung nach einem der Ansprüche 1 bis 7, **dadurch gekennzeichnet, dass** die Hebe- und Senkeinrichtung (3) für die Hubbewegung des lasttragenden Zapfens (7) oder des Kragarms einen, vorzugsweise einen sechs- oder achteckigen Querschnitt aufweisenden, insbesondere hydraulischen, Hubzylinder (15) umfasst, wobei der Hubzylinder (15), vorzugsweise an seinem unteren Ende, gegebenenfalls kardanisch gelagert ist.

9. Verladehilfseinrichtung nach einem der Ansprüche 1 bis 8, **dadurch gekennzeichnet, dass** in dem Rahmengestell (2) zwei, vorzugsweise spiegelverkehrte, Boden- (9) und Positions-Baugruppen (10) mit jeweils einer Hebe- und Senkeinrichtung (3) vorgesehen sind.

10. Verladehilfseinrichtung nach Anspruch 9, **dadurch gekennzeichnet, dass** die Boden-Baugruppe (9) eine, vorzugsweise elektromotorisch angetriebene, Ausgleichsplattform (12) aufweist, auf der sich die Positions-Baugruppe (10) abstützt.

11. Verladehilfseinrichtung nach Anspruch 10, **dadurch gekennzeichnet, dass** die Positions-Baugruppe (10) über die Ausgleichsplattform (12), beispielsweise über vier Spindeln (14), mit der Boden-Baugruppe (9) verbunden ist.

12. Verladehilfseinrichtung nach einem der Ansprüche 7 bis 11, **dadurch gekennzeichnet, dass** die Boden-Baugruppe (9) die Räder (5) mit mindestens einem Antriebsmotor und die Antriebssteuerung, die Höhenverstellung für die Räder (5), eine Energieversorgung, den Antrieb für die Ausgleichsplattform (12) und den Sicherungsmechanismus mit seinem Antrieb umfasst.

13. Verladehilfseinrichtung nach einem der Ansprüche 7 bis 12, **dadurch gekennzeichnet, dass** die Positions-Baugruppe (10) eine Steuerung bzw. Regelung für den bzw. die Hubzylinder (15) sowie deren Positioniersteuerung für das Lasthebemittel, wie Zapfen (7) oder Kragarm umfasst.

14. Verladehilfseinrichtung nach einem der Ansprüche 7 bis 13, **dadurch gekennzeichnet, dass** die Hebe-Baugruppe (11) Lasthebemittel, wie Zapfen (7) oder Kragarm, gegebenenfalls eine Abstützung (17) für einen Ausleger und/oder ein Erkennungsorgan (18) für die Lastaufnahmefläche der Ladeeinheit umfasst.

15. Verladehilfseinrichtung nach einem der Ansprüche 1 bis 14, **dadurch gekennzeichnet, dass** der Zapfen (7) einen in Zapfenlängsrichtung beweg- bzw. ausfahrbaren, gegebenenfalls verdrehbaren, Zapfenstummel (16) zum Eingriff in den Boden-Eckfitting eines Containers, eine senkrecht nach oben weisende Zapfennase (19) zum Eingriff in Boden-Fittings und eine Hebenut (20) zum Einrasten der Ladekante einer Wechselbrücke aufweist.

## Claims

1. Automotive loading aid device which can be moved on a track (1), for transferring or loading at least one loading unit, in particular a container or a swap-body platform, from one railway carriage to another or from a railway carriage to a vehicle, in particular a lorry, or a storage place, or from one vehicle to another vehicle or a loading ramp or storage place or vice versa, which can be positioned in the region of the loading unit which is to be loaded, preferably in the region of a container floor corner fitting or a loading edge, and comprises at least one lifting and lowering device (3) which comprises a load-bearing spigot (7) or a cantilever arm, whereby at least one frame (2) for the lifting and lowering device (3), a control of the lifting and lowering device (3) and a driving controller with a bogey frame (4) for at least one bogey or wheels (5) is/are provided, and that the bogey or the wheels (5) is/are vertically adjustable with respect to the bogey frame (4), or the bogey frame (4) is vertically adjustable with respect to the frame (2), **characterised in that** the bogey frame (4) or the frame (2) is designed in such a manner that it rests on the rails of the tracks (1) in the lifting and lowering mode.

2. Loading aid device in accordance with Claim 1, **characterised in that** a securing mechanism is provided which connects the loading aid device, equal to profile or flush with profile, to the rails of the tracks (1) in the lifting and lowering mode.

3. Loading aid device in accordance with Claim 2, **characterised in that** the securing mechanism consists of electromechanical components, for example at least one magnet.

4. Loading aid device in accordance with Claim 2, **characterised in that** the securing mechanism consists of self-locking track clamps (6) preferably gripping behind the rail heads.

5. Loading aid device in accordance with one of Claims 1 to 4, **characterised in that** the height of the bogeys or the wheels (5) or the bogey frame (4) is adjusted hydraulically, pneumatically or electromechanically.

6. Loading aid device in accordance with one of Claims 1 to 5, **characterised in that** the frame (2) rests on the upper faces of the rails itself or with its bogey frame (4) in the lifting and lowering mode, whereby clearances (13) like wheel cases are provided in the region of the wheels.

7. Loading aid device in accordance with one of Claims 1 to 6, **characterised in that** the lifting and lowering device (3) is arranged modularly as lifting assembly (11), the control of the lifting and lowering device (3) as positioning assembly (10), and the bogey frame (4) or the bogeys or the wheels (5) with their driving controllers as floor assembly (9) in the frame (2).

8. Loading aid device in accordance with one of Claims 1 to 7, **characterised in that** the lifting and lowering device (3) comprises a lifting cylinder (15), in particular a hydraulic one, preferably provided with a hexagonal or octagonal cross-section, for the lifting movement of the load-bearing spigot (7) or the cantilever arm, whereby the lifting cylinder (15) is mounted, preferably at its lower end, on gimbals where applicable.

9. Loading aid device in accordance with one of Claims 1 to 8, **characterised in that** two, preferably back-to-front, floor (9) and positioning assemblies (10) are each provided with a lifting and lowering device (3) in the frame (2).

10. Loading aid device in accordance with Claim 9, **characterised in that** the floor assembly (9) is provided with a preferably electric motor driven compensating platform (12), on which the positioning assembly (10) is rested.

11. Loading aid device in accordance with Claim 10, **characterised in that** the positioning assembly (10) is connected with the floor assembly (9) via the compensating platform (12), for example via four spindles (14).

12. Loading aid device in accordance with one of Claims 7 to 11, **characterised in that** the floor assembly (9) comprises the wheels (5) with at least one drive motor and the driving controller, the vertical adjustment for the wheels (5), a power supply, the drive for the compensating platform (12) and the securing mechanism with its drive.

13. Loading aid device in accordance with one of Claims 7 to 12, **characterised in that** the positioning assembly (10) comprises a controller or control for the lifting cylinder(s) (15) as well as their positioning controller for the hoisting means, such as a spigot (7) or a cantilever arm.

14. Loading aid device in accordance with one of Claims 7 to 13, **characterised in that** the lifting assembly (11) comprises hoisting means, such as a spigot (7) or a cantilever arm, a support (17) for a boom, where applicable, and/or a detector body (18) for the loading surface of the loading unit.

15. Loading aid device in accordance with one of Claims 1 to 14, **characterised in that** the spigot (7) is provided with a spigot stump (16), rotating where applicable, that is movable or extendable in the longitudinal direction of the spigot for engagement in the floor corner fitting of a container, a spigot nose (19) directed vertically upwards for engagement in corner fittings and a lifting groove (20) for engaging the loading edge of a swap-body platform.

## Revendications

1. Installation de chargement auxiliaire automotrice mobile sur deux rails (1) pour le transbordement et le chargement d'au moins une unité de chargement, en particulier d'un conteneur ou d'une caisse mobile, à partir d'un wagon des chemins de fer vers un autre wagon ou à partir d'un wagon des chemins de fer vers un véhicule, en particulier vers un poids lourd, ou vers une place de stationnement, ou à partir d'un véhicule vers un autre véhicule ou vers un pont de chargement ou bien vers une place de stationnement et vice versa ; cette installation de chargement auxiliaire étant positionnable sur l'unité de chargement à charger, de préférence sur les pièces de coin du conteneur ou bien sur une rampe de chargement, et qui dispose au moins d'un dispositif d'élévation (3) comprenant un axe de charge (7) ou un bras en porte-à-faux, pour laquelle sont prévus : au moins un châssis (2) pour le dispositif d'élévation (3), une commande du dispositif d'élévation (3) et une commande d'entraînement avec un châssis de bogie (4) pour au moins un bogie, ou bien des roues (5). Le bogie ou bien les roues (5) étant réglables en hauteur par rapport au châssis de bogie (4) ou les châssis de bogie (4) étant réglables par rapport au châssis (2); et cette installation de chargement auxiliaire étant **caractérisée par le fait que** le châssis de bogie (4) ou bien le châssis (2) sont de nature à reposer sur les rails des voies (1) lors du levage et du lamage.

2. Installation de chargement auxiliaire conforme à la revendication 1 **caractérisée par le fait qu'**un mécanisme de sécurité relie l'installation de chargement auxiliaire aux rails des voies (1) à profil égal ou affleuré lors du levage et du lamage.

3. Installation de chargement auxiliaire conforme à la revendication 2 **caractérisée par le fait qu'**un mécanisme de sécurité est prévu, qui est composé d'éléments électromécaniques, par exemple d'au moins un aimant.

4. Installation de chargement auxiliaire conforme à la revendication 2 **caractérisée par le fait que** le mécanisme de sécurité est composé des pinces de rail d'autoprotection serrées à l'arrière des champignons de rail (6).

5. Installation de chargement auxiliaire selon l'une des revendications 1 à 4 **caractérisée par le fait qu'**un réglage en hauteur des bogies ou bien des roues (5) ou bien du châssis de bogie (4) s'opère de façons hydraulique, pneumatique ou électromécanique.

6. Installation de chargement auxiliaire selon l'une des revendications 1 à 5 **caractérisée par le fait que** le châssis (2) ou le châssis de bogie (4) repose sur les bandes de roulement des rails lors du levage ou du lamage pour laquelle sont prévues des réserves (13) semblables à des passages de roues au niveau des roues (5).

7. Installation de chargement auxiliaire selon l'une des revendications 1 à 6 **caractérisée par le fait que** le dispositif d'élévation (3) est exécuté sous la forme d'une module redresseur (11), que le mécanisme de commande du dispositif d'élévation (3) est exécuté sous la forme d'une module de positionnement (10) et que le châssis de bogie (4) ou bien les bogies ou bien des roues (5) avec le système de commande de propulsion sont exécutés sous la forme d'une module de caisse (9) dans le châssis (2).

8. Installation de chargement auxiliaire selon l'une des revendications de 1 à 7 **caractérisée par** un dispositif d'élévation (3) disposant d'un vérin de levage (15), en particulier hydraulique, de préférence ayant une coupe transversale hexagonale ou octogonale, pour le mouvement de levage du axe de charges (7) ou du bras en porte-à-faux. Le cas échéant, le vérin de levage (15) est pivotant, de préférence à son bas bout.

9. Installation de chargement auxiliaire conforme à une des revendications de 1 à 8 **caractérisée par** deux modules de caisse (9) et modules de position(10), de préférence inversés, dans le châssis (2) avec respectivement un dispositif d'élévation (3).

10. Installation de chargement auxiliaire conforme à la revendication 9 **caractérisée par le fait que** le module de caisse (9) dispose d'une plateforme de compensation (12), de préférence électromotrice, et sert de support pour le module de position (10).

11. Installation de chargement auxiliaire conforme à la revendication 10 **caractérisée par le fait que** le module de position (10) est relié au module de caisse (9) par la plateforme de compensation (12), par exemple par quatre broches.

12. Installation de chargement auxiliaire conforme aux revendications 7 à 11 1 **caractérisée par le fait que** le module de caisse (9) comprend des roues (5) avec au moins un moteur d'entraînement et la commande d'entraînement du dispositif de réglage en hauteur des roues (5), de l'alimentation en énergie, de l'entraînement pour la plateforme de compensation (12) et le mécanisme de sécurité avec son entraînement.

13. Installation de chargement auxiliaire conforme aux revendications 7 à 12 **caractérisée par le fait que** le module de position (10) dispose d'une commande ou bien d'un réglage pour le/s vérin/s de levage (15) ainsi que d'une commande de positionnement pour le dispositif de levage, comme l'axe de charges (7) ou le bras en porte-à-faux.

14. Installation de chargement auxiliaire conforme aux revendications 7 à 13 **caractérisée par le fait que** le module redresseur (11) comprend des dispositifs de levage comme un axe de charge (7) ou un bras en porte-à-faux, ainsi qu'un appui pour une flèche le cas échéant et/ou un organe de détection (18) pour la surface de chargement de l'unité de charge.

15. Installation de chargement auxiliaire conforme aux revendications 1 à 14 **caractérisée par le fait que** l'axe de charge (7) comprend un bout d'axe (16) déplaçable et extensible dans le sens de la longueur de l'axe, le cas échéant pivotant et qui s'engage dans les pièces du coin du conteneur, un nez d'axe(19) pointant verticalement vers le haut pour s'engager dans l'armature du sol, ainsi qu'une rainure de levage (20) en tant que dispositif d'encliquetage pour la rampe de chargement d'une caisse mobile.
